# EUROPÄISCHE PATENTSCHRIFT

(11) **EP 1 894 217 B1**
(45) Veröffentlichungstag und Bekanntmachung des Hinweises auf die Patenterteilung: **30.07.2008**
(21) Anmeldenummer: 06741653.7
(22) Anmeldetag: 16.06.2006
(51) Int. Cl.: H01H 9/52, H02G 5/10

(54) **ELEKTRISCHE ANLAGE MIT EINEM KÜHLELEMENT UND VERFAHREN ZUM BETRIEB DIESER ANLAGE**
ELECTRICAL SYSTEM COMPRISING A COOLING ELEMENT, AND METHOD FOR THE OPERATION OF SAID SYSTEM
INSTALLATION ELECTRIQUE POURVUE D'UN ELEMENT DE REFROIDISSEMENT ET PROCEDE PERMETTANT DE FAIRE FONCTIONNER CETTE INSTALLATION

(30) Priorität: 23.06.2005 EP 05405396
(43) Veröffentlichungstag der Anmeldung: 05.03.2008
(73) Patentinhaber: ABB RESEARCH LTD., 8050 Zürich (CH)
(72) Erfinder: KIEFER, Jochen, CH-5415 Nussbaumen (CH); LAKNER, Martin, CH-5412 Gebenstorf (CH); MAUROUX, Jean-Claude, CH-5502 Hunzenschwil (CH); CHARTOUNI, Daniel, CH-5400 Baden (CH)
(74) Vertreter: ABB Patent Attorneys
(86) Internationale Anmeldenummer: PCT/CH2006/000328
(87) Internationale Veröffentlichungsnummer: WO 2006/136044

(56) Entgegenhaltungen:
- EP-A- 0 395 314
- DE-A1- 2 051 150
- GB-A- 1 162 339
- GB-A- 1 390 908
- US-A- 5 889 467

## Beschreibung

### TECHNISCHES GEBIET

Die vorliegende Erfindung bezieht sich auf eine elektrische Anlage nach dem Oberbegriff von Patentanspruch 1 und auf ein Verfahren zum Betrieb dieser Anlage. Die Anlage weist einen bei Betrieb der Anlage Stromwärme erzeugenden Stromleiter auf sowie ein Kühlelement. Das Kühlelement dient der Erhöhung der Nennstromtragfähigkeit der Anlage und enthält ein kondensierbares Arbeitsmittel sowie einen vom Stromleiter der Anlage heizbaren Verdampfer und einen der Heizwirkung des Stromleiters entzogenen Kondensator. Eine solche Anlage ist im allgemeinen als Generatorableitung ausgebildet und dient dann der elektrisch leitenden Verbindung zwischen einem Generator eines Kraftwerks und einem in ein Hochspannungsnetz einspeisenden Transformator. Diese Verbindung kann gekapselt ausgeführt sein und enthält dann einen die Kapselung bildenden und der Führung von Rückstrom dienenden Aussenleiter. Sie kann aber auch ungekapselt ausgeführt sein. Der Stromleiter steht dann unmittelbar mit der Umgebungsluft in Wärmekontakt.

### STAND DER TECHNIK

Eine Anlage der vorgenannten Art ist beschrieben in den beiden älteren europäischen Patentanmeldungen 04405 704.0 resp. 04405 751.1, angemeldet am 16.11.2004 resp. 3.12.2004. Bei dieser in eine Generatorableitung integrierten Anlage wird ein Generatorstrom führender Stromleiter mit Hilfe von Kühlelementen auf einer erwünscht niedrigen Betriebstemperatur gehalten. Jedes der Kühlelemente weist einen auf dem Stromleiter mit gutem Wärmekontakt angeordneten und ein flüssiges Arbeitsmittel enthaltenden Verdampfer auf sowie einen Kondensator, welcher je nach Ausführungsform des Kühleelements entweder gegenüber dem Verdampfer resp. dem Stromleiter elektrisch isoliert auf einer als Aussenleiter wirkenden Kapselung angeordnet ist oder sich im Inneren der Kapselung befindet und dann mit Hilfe einer Gasströmung konvektiv gekühlt werden muss.

Eine ungekapselt ausgeführte Anlage der vorgenannten Art ist beschrieben in der älteren europäischen Anmeldung 04405786.7, angemeldet am 20.12.2004. Bei dieser Anlage wird ein von den beiden Kontaktstücken und den Stromanschlüssen eines Vakuumschalters gebildeter Stromleiter mit Hilfe mindestens eines ebenfalls nach dem Kondensationsprinzip arbeitenden Kühlelements auf niedrigen Betriebstemperaturen gehalten. Das Kühlelement und gegebenenfalls vorgesehene weitere Kühlelemente sind dem unmittelbaren Einfluss der Umgebungsluft ausgesetzt.

Weiterhin ist aus der EP 0 395 314 A1 ein Supraleitersystem zur Energieverteilung bekannt, bei dem der Strom von einer Stromversorgungseinheit mittels Supraleitern zu Subsystemen übertragen wird. Die Stromübertragung im Supraleitersystem erfolgt somit verlustfrei, also ohne Erzeugung jeglicher Stromwärme, was der Definition eines Supraleiters entspricht (sprunghafter Verlust des elektrischen Widerstandes unterhalb einer Sprungtemperatur). In der EP 0 395 314 A1 wird lediglich offenbart, dass Wärme, welche vom Wärmereservoir der Umgebung auf das Kältereservoir des Supraleiters übertragen wird, von einer kryogenen Flüssigkeit abgeführt wird. Der Supraleiter besitzt ferner eine mehrschalige Umhüllung zur thermischen Isolation, welche einen Wärmeübertrag über die ganze Länge des Supraleiters unterbinden soll. Weiterhin weist das Supraleitersystem einen komplexen Rohrleitungskreislauf zur Leitung der kryogenen Flüssigkeit auf, woran eine Verflüssigungseinheit gekoppelt ist, die einen Kondensator enthält.

### DARSTELLUNG DER ERFINDUNG

Der Erfindung, wie sie in den Patentansprüchen angegeben ist, liegt die Aufgabe zugrunde, eine Anlage der eingangs genannten Art zu schaffen, welche sich bei hoher Stromtragfähigkeit und klein gehaltenen Abmessungen durch eine grosse Betriebssicherheit auszeichnet, sowie ein Verfahren zum Betrieb dieser Anlage anzugeben.

Die Anlage nach der Erfindung enthält eine Überwachungseinrichtung mit mindestens einem Sensor zur Erfassung einer Kenngrösse des in der Anlage vorgesehenen Kühlelements und mit einer Ausgangssignale des Sensors aufnehmenden Auswerteeinheit zur Bewertung der Ausgangssignale und zur Bildung eines den Zustand und/oder die Funktionsfähigkeit des Kühlelements beschreibenden Signals. Durch diese Massnahmen wird erreicht, dass der Betreiber der Anlage jederzeit den Zustand und/oder die Funktionsfähigkeit des Kühlelements kennt. Er kann daher die Anlage auch beim Führen hoher Nennströmen mit grosser Sicherheit betreiben.

Ist der Sensor zur Erfassung der Temperatur und/oder der Temperaturverteilung eines Kondensators des Kondensators, als Sensor zur Erfassung des Drucks eines Arbeitsmittels im Kühlelement oder als Sensor zur Erfassung des Strömungsverhalten, insbesondere des Durchflusses, des Arbeitsmittels im Kühlelement, ausgebildet und angeordnet, so können mit geringem Aufwand der Zustand und/oder die Funktionsfähigkeit des Kühlelements kontinuierlich kontrolliert werden.

Eine berührungslose Erfassung der Temperatur und/oder der Temperaturverteilung des Kühlelements, insbesondere dessen Kondensators, wird ermöglicht, wenn der Temperatursensor mit Abstand zum Kühlelement angeordnet und zur Erfassung von Wärmestrahlung ausgeführt ist. Infolge der berührungslosen Anordnung des Temperatursensors ist es nicht erforderlich, den Sensor gegenüber dem Kühlelement elektrisch zu isolieren. Alle Teile des Kühlelements können daher auf Hochspannungspotential, der Sensor hingegen auf Erdpotential gehalten sein. Im allgemeinen ist dieser Temperatursensor als Photozelle, Pyrometer oder Bolometer ausgeführt. Soll im Kühlelement, vorzugsweise im Kondensator, oder in irgendeinem anderen Teil der Anlage, beispielsweise in einem Abschnitt des Stromleiters, die lokale Verteilung der Temperatur erfasst werden, so ist es günstig, den Temperatursensor als Wärmebildkamera auszubilden. Die Kenntnis der Wärmeverteilung ermöglicht beispielsweise eine Frühdiagnose der Funktionsfähigkeit des Kondensators und kann so rechtzeitig eine unerwünschte Überlastung des Kühlelements verhindern.

Es ist vorteilhaft, den Sensor derart als Strömungssensor auszubilden, dass er in der Lage ist, eine im Kühlelement auftretende Strömung von Arbeitsmittel optisch, magnetisch oder kapazitiv zu detektieren. Es kann so die Menge des während des Betriebs der Anlage aus dem Kondensator zum Verdampfer zurückfliessenden Arbeitsmittels bestimmt werden, woraus auf den Zustand und/oder die Funktionsfähigkeit des Kühlelements geschlossen werden kann.

Weist das Kühlelement einen Isolator auf, der es ermöglicht, den Kondensator auf Erdpotential bzw. auf das elektrische Potential der Kapselung zu führen, so kann der Temperatursensor als Thermoelement ausgeführt sein. Mit zwei oder mehr am Kondensator positionierten Thermoelementen kann dann die Wärmeverteilung über das zu vermessende Teil mit besonders einfachen Mitteln erfasst werden. Zugleich empfiehlt es sich dann, einen Sensor zur Erfassung von Teilentladungen vorzusehen. Dieser Sensor kontrolliert die elektrischen Eigenschaften des dielektrisch belasteten Kühlelements und erkennt rechtzeitig Mängel am Isolator sowie an einer im Inneren des Kühlelements vorgesehenen dielektrisch belasteten Gasstrecke.

Eine Erhöhung der Redundanz bei der Überwachung der Anlage nach der Erfindung wird dadurch erreicht, dass mindestens zwei Sensoren vorgesehen sind, welche jeweils verschiedene Kenngrössen des Kühlelements erfassen, etwa die Temperatur und/oder die Temperaturverteilung des Kühlelements, insbesondere des Kondensators, den Druck im Inneren des Kühlelements, sowie gegebenenfalls auch die Strömung des Arbeitsmittels.

Zum Erfassen einer Betriebskenngrösse der Anlage und zum Abgleich dieser Kenngrösse mit der erfassten Kenngrösse des Kühlelements ist ein geeignet angeordneter weiterer Sensor vorgesehen, dessen Ausgang mit einem Rechner der Auswerteeinheit verbunden ist. Dieser Sensor ist im allgemeinen zur Erfassung des Strom oder der Temperatur des Stromleiters ausgeführt, bei einer gekapselt ausgeführten Anlage gegebenenfalls zusätzlich zur Erfassung einer im Innenraum zwischen Kapselung und Stromleiter herrschenden Lufttemperatur. Durch den Abgleich wird frühzeitig erkannt, ob das Kühlelement noch voll, lediglich teilweise oder gar nicht mehr funktionsfähig ist.

Beim erfindungsgemässen Verfahren zum Betrieb der Anlage wird mindestens eine Kenngrösse des Kühlelements erfasst, wird die erfasste Kenngrösse mit vorgegebenen Werten der Kenngrösse verglichen, und wird aus den Vergleichswerten ein den Zustand und/oder die Funktionsfähigkeit des Kühlelements beschreibendes Signal gebildet. Dieses Signal kann für eine Diagnose oder Frühdiagnose des Kühlelements abgerufen werden oder es wird oberhalb eines Grenzwerts als Meldesignal ausgegeben. Hierdurch wird eine hohe Betriebssicherheit der Anlage erreicht.

Die erfassten Werte der Kenngrösse werden vor dem Vergleich mit den zuvor genannten Betriebskenngrössen der Anlage abgeglichen. Durch diesen Abgleich wird die Überwachungsvorrichtung fortlaufend an die aktuellen Betriebsparameter der Anlage angepasst. Die Betriebssicherheit der Anlage wird so zusätzlich erhöht.

Die Kenngrösse des Kühlelements wird im allgemeinen während des Betriebs der Anlage erfasst, so dass während des Betriebs der Anlage auftretende Fehler am Kühlelement rasch entdeckt und gemeldet werden können. Die Kenngrösse des Kühlelements kann aber auch schon vor der Inbetriebnahme oder während einer Revision der Anlage erfasst werden. Das Risiko des Ausfalls der Anlage während des Betriebs wird so zusätzlich reduziert.

### KURZE BESCHREIBUNG DER FIGUREN

Anhand von Zeichnungen werden nachfolgend Ausführungsbeispiele der Erfindung näher erläutert. Hierbei zeigen in schematischer Darstellung:
- Fig.1: eine Draufsicht auf einen Abschnitt einer ersten Ausführungsform der Anlage nach der Erfindung, bei der ein nach oben weisender Teil einer Kapselung dieser Anlage entfernt wurde,
- Figuren 2 und 3: in vergrösserter Darstellung jeweils eine von zwei Ausführungsformen eines von Sensoren überwachten Kühlelements der Anlage gemäss Fig.1, und
- Fig.4: eine Draufsicht auf einen Abschnitt einer ungekapselt ausgebildeten zweiten Ausführungsform der Anlage nach der Erfindung.

### WEG ZUR AUSFÜHRUNG DER ERFINDUNG

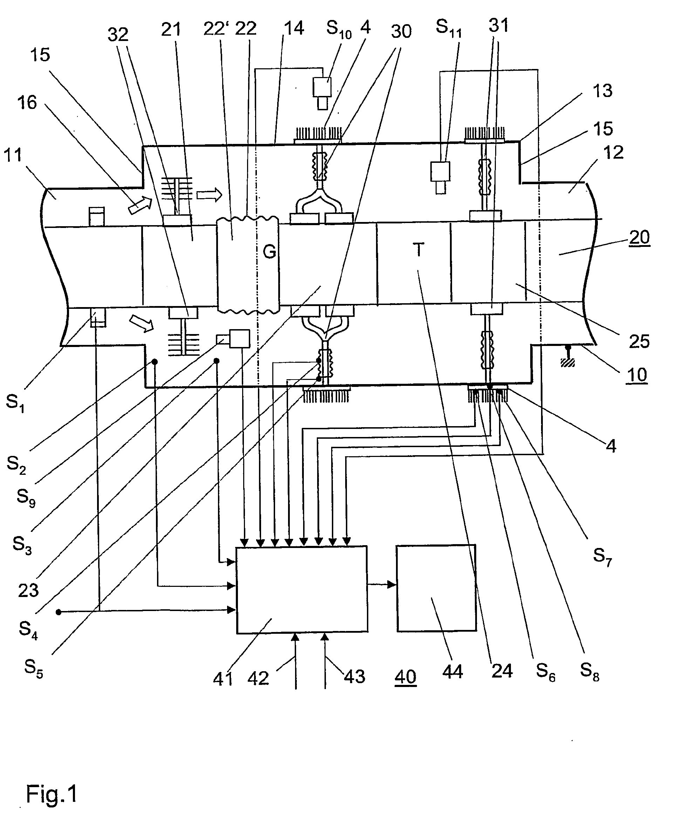

In allen Figuren beziehen sich gleiche Bezugszeichen auf gleichwirkende Teile. Der in Fig.1 dargestellten Anlagenabschnitt ist Teil einer Phase einer mehrphasigen Generatorableitung und enthält eine geerdete Metallkapselung 10, einen in der Kapselung 10 gehaltenen Stromleiter 20, Kühlelemente 30, 31 und 32 und eine Überwachungseinrichtung 40, die über nicht bezeichnete Signalleitungen mit den Ausgängen von Sensoren S₁ bis S₁₁ verbunden ist.

Die Kapselung 10 dient der Führung eines bei Betrieb der Anlage auftretenden Rückstroms und enthält ein mit einem nicht dargestellten Generatorgehäuse verbindbares Mantelrohr 11, ein mit einem ebenfalls nicht dargestellten Transformatorgehäuse verbindbares Mantelrohr 12 sowie ein prismenförmiges Gehäuse 13 mit parallel zum Stromleiter 20 ausgerichteten Seitenwänden 14 und senkrecht zum Stromleiter ausgerichteten Querwänden 15. In die Querwände 15 ist jeweils eine kreisrunde Öffnung zur Durchführung des Stromleiters 20 eingeformt. Ein Ende des Mantelrohrs 11 bzw. 12 ist an einem die Öffnung begrenzenden Rand einer der beiden Querwände 15 befestigt.

Der Stromleiter dient der Führung eines im Generator erzeugten Stroms von typischerweise 10 bis 50 kA bei Spannungen von typischerweise 10 bis 50 kV. Er weist mehrere Abschnitte 21 bis 25 auf, von denen drei, nämlich 21, 22 und 23, Teil eines in die Generatorableitung eingebauten Generatorschalters G und zwei, nämlich 24 und 25, Teil eines in Serie zum Generatorschalter in die Generatorableitung eingebauten Trennschalters T sind. Ersichtlich stehen die Abschnitte 21, 23 und 25 in wärmeleitendem Kontakt mit je zwei der Kühlelemente 30, 31 und 32.

Der Abschnitt 21 umfasst ein Gehäuse, welches dem elektrischen Anschluss des Generatorschalters G an zum Generator führenden Abschnitt der Generatorableitung dient. Der nach rechts anschliessende Abschnitt 22 ist als Löschkammer des Generatorschalters G ausgeführt und enthält eine durch einen Löschkammerisolator 22' umschlossene und daher nicht ersichtliche Kontaktanordnung mit einem Nennstrom- und einem dazu parallel geschaltetem Abbrandkontaktsystem. In einem an die Löschkammer anschliessenden Antriebsgehäuse 23 des Generatorschalters ist ein Getriebe eines Antriebs zum Öffnen und Schliessen der in der Löschkammer vorgesehenen Kontaktsysteme angeordnet.

An das Antriebsgehäuse 23 schliesst nach rechts ein als bewegliches Trennerrohr ausgebildeter und dem Trennschalter T zugeordneter Abschnitt 24 des Stromleiters an. Das Trennerrohr dient der Erzeugung einer sichtbaren Trennstrecke im Stromleiter. Der nach rechts anschliessende Abschnitt 25 des Stromleiters ist ein Trennergehäuse, das die Aufnahme des Trennerrohrs 24 und eines zwischen Trennergehäuse 25 und Trennerrohr angeordneten Gleitkontakts ermöglicht. Das Trennergehäuse 25 ist in elektrisch leitender Weise mit einem zum Transformator geführten Abschnitt der Generatorableitung verbunden.

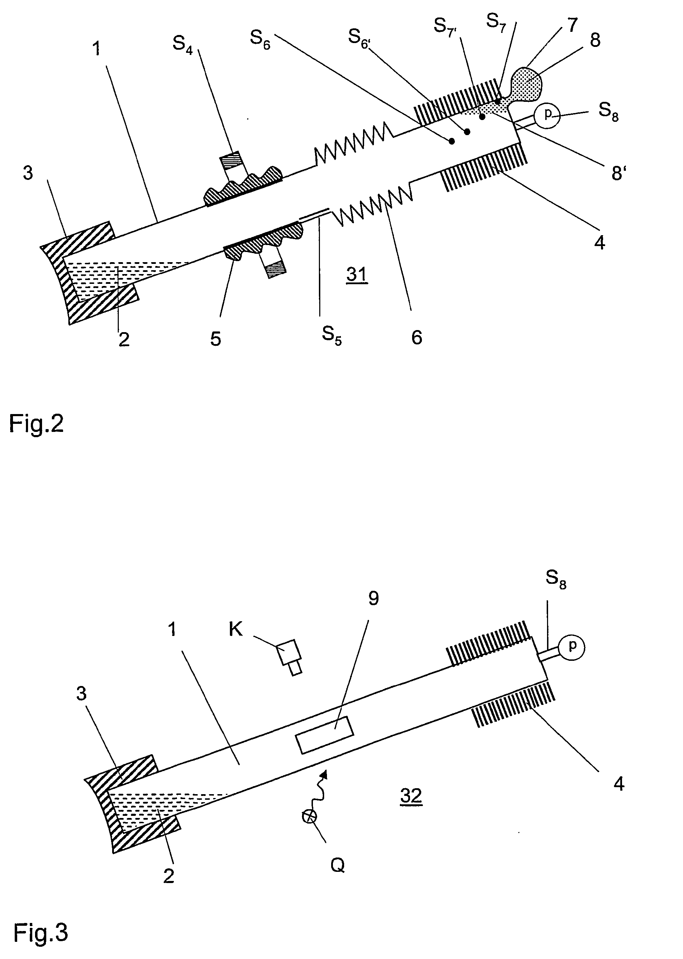

Die Kühlelemente 30, 31 und 32 sind jeweils als Wärmerohr (heat pipe) ausgeführt. Aus den Figuren 2 und 3 sind die Kühlelemente 31 und 32 vergrössert ersichtlich. Sie weisen jeweils ein hermetisch abgeschlossenes und von einem Rohr 1 begrenztes Volumen auf, in dem ein im Volumen zirkulierbares Arbeitsmittel 2 angeordnet ist. Bei den Kühlelementen 30 bis 32 zirkuliert das Arbeitsmittel unter der Wirkung der Gravitation. Das Rohr 1 ist daher gegenüber der Horizontalen geneigt angeordnet. Am unteren Ende des Rohrs 1 befindet sich dann ein Verdampfer 3 und am oberen Ende des Rohrs ein Kondensator 4. Der Verdampfer 3 ist aus Metall gefertigt und ist thermisch an den Stromleiter 20 angekoppelt (aus Fig.1 ersichtlich). Auch der Kondensator 4 ist aus Metall gefertigt. Er weist der Heizwirkung des Stromleiters 20 entzogene Kühlrippen auf.

Im Rohr der Kühlelemente 30 bis 32 können vom Verdampfer zum Kondensator erstreckte Kapillaren angeordnet sein. Das im Kondensator 4 verflüssigte Arbeitsmittel wird dann durch Kapillarkräfte vom Kondensator zum Verdampfer 3 zurückgeführt. Ein mit Kapillaren versehenes Kühlelement kann unabhängig von seiner Position, also nach oben, nach unten oder horizontal ausgerichtet, in die Anlage eingebaut sein.

Bei den Kühlelementen 30 und 31 ist der Kondensator 4 im allgemeinen aus dem Innenraum der Kapselung 10 herausgeführt und auf einer Seitenfläche und/oder einer Deckfläche des Gehäuses 13 wärmeleitend angeordnet. Zur Überbrückung der Potentialdifferenz zwischen Verdampfer 3 resp. Stromleiter 20 und Kondensator 4 resp. Gehäuse 13 ist hierbei ein eine Isolationsstrecke bildender lsolierhohlkörper 5 vorgesehen, welcher, wie aus Fig.2 ersichtlich ist, zur Vergrösserung des Kriechwegs mit Vorteil eine Beschirmung aufweist. Weiter weist das in Fig. 2 dargestellte Kühlelement 31 einen durch einen Balg 6 gebildeten flexiblen Bereich auf, wodurch die an beiden Seiten des Balgs befestigten Teile des Rohrs 1 relativ zueinander bewegbar sind, so dass mechanische Spannungen, wie sie beispielsweise bei Erschütterungen auftreten können, abgefangen werden und nicht zu Undichtigkeiten des Rohrs 1 führen.

Wie beim Kühlelement gemäss Fig.2 dargestellt, ist im Bereich des Kondensators 4 ein Auffangbehälter 7 vorgesehen, dessen Volumen bei Druckänderungen im Innern des Rohrs 1 veränderlich ist. Ausser dem Arbeitsmedium 2 ist in dem Wärmerohr noch ein Hilfsgas 8, etwa Luft mit einem Partialdruck von einigen hundert mbar, vorgesehen, welches auch bei einem geringen Partialdruck des Arbeitsmittels 2, wie er sich bei tiefen Temperaturen einstellen kann, noch eine gute dielektrische Festigkeit der Kühlelemente 30, 31 gewährleistet.

Der Kondensator 4 kann lediglich mit einem Rohr 1 (Kühlelement 31) zur Erhöhung der Wärmeabfuhr aber auch mit zwei Rohren 1 (Kühlelemente 30) zusammenwirken. Statt den Kondensator, wie bei den Kühlelementen 30 und 31, nach aussen zu führen, kann er, wie bei den Kühlelementen 32, auch im Inneren der Kapselung 10 angeordnet sein. Ein solches Kühlelement ist in Fig.3 dargestellt. Da das Kühlelement 32 keine Potentialdifferenz überbrückt, kann es vollständig aus Metall geformt sein. Der Kondensator 4 dieses Kühlelements ist jedoch mit einer in der Kapselung 10 geführten Gasströmung 16 (Fig.1) zu kühlen.

Während des Betriebs erwärmt der im Stromleiter 20 geführte und im Generator erzeugte Nennstrom die Anlage beträchtlich. Da besonders gefährdete Teile der Anlage, beispielsweise den Stromleiter tragende Isolatoren, eine Grenztemperatur von beispielsweise 105°C nicht überschreiten dürfen, kann nur ein bestimmter Nennstrom, welcher ohne Kühlung beispielsweise 13 kA betragen darf, geführt werden. Im Verdampfer 3 wird das Arbeitsmittel 2 verdampft und dabei dem Stromleiter 20 Wärme entzogen. Mit einem geeigneten Arbeitsmittel 2, wie etwa Aceton oder einem Hydro-Fluor-Äther, kann so trotz eines gegenüber einer ungekühlten Anlage erheblich gesteigerten Nennstroms der Stromleiter 20 auf einer Temperatur von ca. 90°C gehalten werden. Das verdampfte Arbeitsmittel verflüssigt sich unter Abgabe von Kondensationswärme im Kondensator 4 und fliesst infolge der Schwerkraft über das schräg gestellte Rohr 1 wieder in den Verdampfer 3 zurück. Weist das Kühlelement Kapillaren auf, so gelangt das verflüssigte Arbeitsmittel infolge der Kapillarkräfte, gegebenenfalls entgegen der Schwerkraft, zum Verdampfer. Um noch rasche Verflüssigung zu erreichen, sollte sich der Kondensator 4 typischerweise allenfalls auf ca. 70°C erwärmen. Durch die geeignet ausgebildeten und geeignet verteilten Kühlelemente in der Anlage kann so der Nennstrom auf beispielsweise 22 kA erhöht werden, ohne die vorgegebene Grenztemperatur zu überschreiten. Da dies jedoch nur mit einwandfrei arbeitenden Kühlelementen 30 bis 32 möglich ist, ist es für einen sicheren und zuverlässigen Betrieb der Anlage von grosser Tragweite, dass der Anlagenbetreiber stets den Zustand und/oder die Funktionsfähigkeit der Kühlelemente kennt.

Durch die in der Anlage verteilten Sensoren S₁ bis S₁₁ (Fig.1 ) werden dem Anlagenbetreiber wertvolle Informationen über den Zustand und/oder die Funktionsfähigkeit der Kühlelemente 30 bis 32 wie auch der Anlage übermittelt. Mit den Sensoren S₁ bis S₃ werden Betriebskenngrössen der Anlage und mit den Sensoren S₄ bis S₁₁ Betriebskenngrössen der Kühlelemente 30 bis 32 erfasst.

Der Sensor S₁ erfasst den im Stromleiter 20 der Anlage geführten Strom. Der Wert des Stroms kann auch vom Stromerzeuger abgefragt und direkt in die Auswerteeinheit 40 als Betriebskenngrösse eingegeben werden. Mit dem Sensor S₂ wird die im luftgefüllten Innenraum der Kapselung 10 zwischen Gehäuse 13 resp. Kapselung 10 und Stromleiter 20 herrschende Lufttemperatur erfasst. Der Sensor S₂ kann als Thermoelement ausgeführt sein. Mit dem Sensor S₃ wird die Temperatur des Stromleiters 20 resp. eines Abschnitts des Stromleiters erfasst.
Da der Stromleiter 20 bei Betrieb der Anlage auf Hochspannungspotential liegt, ist dieser Sensor mit Abstand zu den hochspannungsführenden Teilen der Anlage angeordnet und zur Detektion von Wärmestrahlung ausgeführt. Mit Vorteil ist er eine Photozelle, ein Pyrometer, ein Bolometer oder aber auch eine Wärmebildkamera.

Der Sensor S₄ ist als Teilentladungssensor ausgeführt. Mit seiner Hilfe können bei den Kühlelementen 30 und 31 indirekt die Isoliereigenschaften des lsolierhohlkörper 5 und die Durchschlagfestigkeit des von ihm umschlossene Volumens überprüft werden. Diese Kontrolle der elektrischen Eigenschaften der Kühlelemente 30 und 31 trägt wesentlich zur Erhöhung der Betriebssicherheit der Anlage bei.

Der Sensor S₅ dient der Messung des Strömungsverhaltens, insbesondere der Durchflussmenge des vom Kondensator 4 zum Verdampfer 3 zurückfliessenden flüssigen Arbeitsmittels 2. Im allgemeinen nutzt er die dielektrischen Eigenschaften des Arbeitsmittels aus und arbeitet nach einem kapazitiven Prinzip, kann gegebenenfalls aber auch magnetisch oder optisch arbeiten. Arbeitet er nach einem optischen Prinzip, so kann - wie in Fig.3 dargestellt ist - das zurückströmende Arbeitsmittel 2 durch ein im Rohr 1 vorgesehenes gasdichtes Fenster 9 mit Hilfe einer Videokamera K und einer gegebenenfalls vorgesehenen Lichtquelle Q beobachtet werden und aus den beobachteten Daten auf die pro Zeiteinheit zurückfliessende Menge an verflüssigtem Arbeitsmittel 2 auf die Funktionsfähigkeit des Kühlelements geschlossen werden. Dies gilt sowohl für das in Fig.3 dargestellte Kühlelement 32 als auch für die Kühlelemente 30 und 31.

Die aus Fig. 1 ersichtlichen Sensoren S₆ und S₇ dienen der Messung der Temperaturverteilung im Kondensator 4 eines der beiden Kühlelemente 31. Da sich dieser Kondensator auf Erdpotential befindet, können die beiden Sensoren jeweils als Thermolelement ausgebildet sein. Um die Temperaturverteilung im Kondensator 4 mit grösserer Auflösung zu erfassen, können entsprechend Fig.2 auch weitere, insbesondere jeweils als Thermoelement ausgeführte, Sensoren S_{6'} und S_{7'}, verwendet werden. Aus der Kenntnis der Temperaturverteilung im Kondensator 4 kann die Funktionsfähigkeit des Kondensators leicht diagnostiziert werden. Während des Betriebs bildet sich nämlich am Kondensator des Kühlelements 31 eine Grenzschicht 8' zwischen dem verdampften Arbeitsmittel 2 und dem durch das verdampfte Arbeitsmittel ins Volumen 7 und den oberen rechten Teil des Kondensators 4 zurückgedrängten Hilfsgas 8 aus. Die Lage dieser Grenzschicht ist von grosser Bedeutung für die Funktionsfähigkeit des Kondensators 4. Verschiebt sie sich bei konstantem Nennstrom, so bedeutet dies, dass das Kühlelement 31 defekt, beispielsweise undicht, ist und nicht mehr seine volle Leistungsfähigkeit aufweist.

Undichtigkeiten können auch mit dem den Druck im Inneren des Kühlelements 31 (Fig.2) resp. auch 32 (Fig.3) erfassenden Sensor S₈ erkannt werden.

Entsprechendes gilt auch für die Sensoren S₉ bis S₁₁, welche jeweils als Wärmebildkamera ausgebildet sind. Wie aus Fig. 1 ersichtlich ist, kann mit der Wärmebildkamera S₁₀ ein Wärmeprofil der ausserhalb des Gehäuses 13 angeordneten Oberfläche des dem Kühlelement 30 zugeordneten Kondensators 4 erfasst werden. Da die Wärmebildkameras beweglich angeordnet sein können, können mit der Wärmebildkamera S₁₀ oder aber auch mit einer weiteren Wärmebildkamera die Wärmeprofile aller anderen ausserhalb des Gehäuses 13 befindlichen Kondensatoren 30 und 31 erfasst werden. Entsprechendes gilt auch für die im Inneren des Gehäuses 13 angeordnete Wärmebildkamera S₉, mit deren Hilfe ein Wärmeprofil des in Inneren des Gehäuses 13 angeordneten Kondensators des Kühlelements 32 erstellt werden kann. Bei beweglicher Ausbildung ermöglicht auch diese Kamera die Erstellung der Wärmeprofile weiterer Komponenten der Anlage, wie eines weiteren Kondensators 32, des Stromleiters 20 resp. ausgewählter Abschnitte 21 bis 25 dieses Leiters. Diese Wärmeprofile können aber auch durch die Wärmebildkamera S₁₁ erstellt werden.

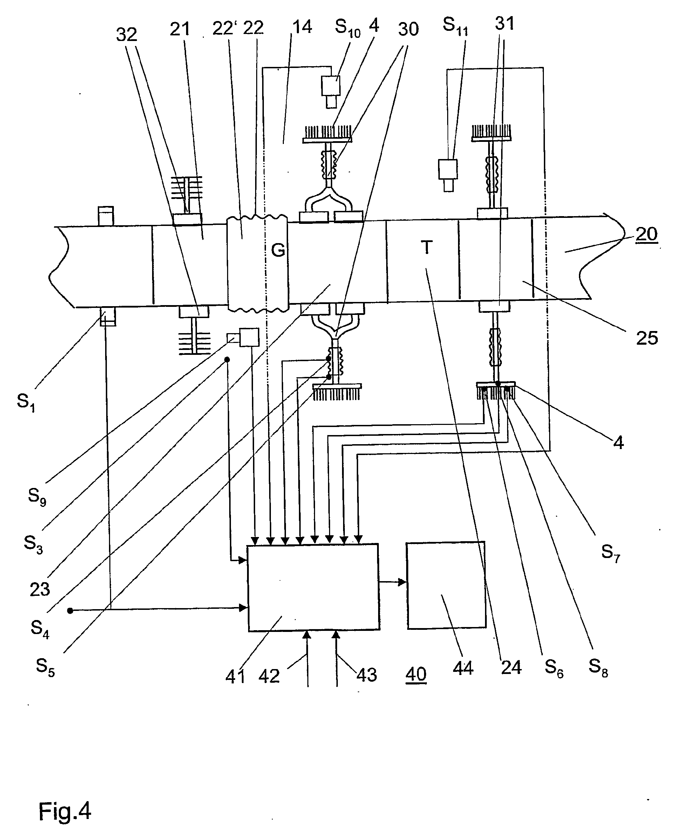

Bei der in Fig.4 dargestellten Ausführungsform der elektrische Anlage nach der Erfindung fehlt ersichtlich die Kapselung 10 und liegt der Stromleiter 20 überwiegend an Luft. Daher ist der Sensor S₂ nun entbehrlich. Grundsätzlich können auch hier die Kühlelemente 30, 31, 32 eingesetzt und - wie beim Ausführungsbeispiel nach Fig.1 beschrieben - mit der die Sensoren S₃ bis S₁₁ und die Auswerteeinheit 40 enthaltenden Überwachungseinrichtung kontrolliert werden. Aus Kostengründen werden bei dieser Anlage im allgemeinen die Kühlelemente 32 eingesetzt. Wie dargestellt, können jedoch auch Kühlelemente 30 und 31 verwendet werden. Sind die Sensoren in der Nähe oder an einem dieser Kühlelemente 30, 31, insbesondere am Kondensator 4, angebracht, dann kann die Übertragung der Ausgangssignale dieser Sensoren ohne. Potentialtrennung, üblicherweise also mit Hilfe einer Drahtverbindung, erfolgen.

Aus Gründen der Übersichtlichkeit sind in den Figuren 1 und 4 lediglich einige besonders repräsentative Sensoren dargestellt. Grundsätzlich können an jedem der Kühlelemente 30 und 31 resp. 32 alle Sensoren, so wie sie in den Fig.2 resp.
Fig.3 angegeben sind, vorgesehen sein. Es können jedoch auch noch zusätzliche Sensoren, wie etwa die Wärmebildkameras S₉ bis S₁₁, vorgesehen sein. Durch die Zuordnung mehrerer Sensoren zu einem Kühlelement wird die Redundanz bei der Überwachung eines Kühlelements erhöht und können lokale Schwachstellen des Kühlelements direkt identifiziert werden. Grundsätzlich reicht aber bereits ein geeignet ausgebildeter Sensor aus, beispielsweise die Wärmebildkamera S₁₀, um den Zustand und/oder die Funktionsfähigkeit des Kühlelements oder gegebenenfalls auch mehrerer Kühlelemente 30 bis 32 und damit der Anlage sicherzustellen. Durch die Verteilung der Sensoren auf alle Kühlelemente der Anlage, können defekte Kühlelemente wirksam selektiert werden.

Vor der Inbetriebsetzung der Anlage, etwa nach der Aufstellung oder nach einer Revision, wird zunächst mindestens eine Kenngrösse des Kühlelements, wie insbesondere die Temperatur des Kondensators 4, die Temperaturverteilung über den Kondensator, der Druck im Kühlelement oder das Strömungsverhalten des Arbeitsmittels 2, erfasst. Die erfassten Werte werden im allgemeinen digital in einem Rechner 41 mit vorgegebenen Sollwerten 42 dieser Kenngrösse verglichen. Aus den so ermittelten Vergleichswerten wird ein den Zustand und/oder die Funktionsfähigkeit des Kühlelements beschreibendes Signal gebildet, welches für eine Diagnose oder eine Frühdiagnose in ein Anzeigegerät 44 abgerufen werden kann oder welches oberhalb eines ebenfalls in den Rechner 41 eingegebenen Grenzwerts 43 am Anzeigegerät 44 als Meldesignal ausgegeben wird.

Die erfassten Werte der Kenngrösse können vor dem Vergleich mit einer zusätzlich erfassten Betriebskenngrössen abgeglichen werden, wie vor allem mit dem vom Stromleiter 20 geführten Nennstrom, der Temperatur des Stromleiters oder bei einer gekapselt ausgeführten Anlage mit einer im Innenraum zwischen Kapselung 10 und Stromleiter 20 herrschenden Lufttemperatur. Verändert sich beispielsweise der Nennstrom, so gelten für die Betriebskenngrössen des Kühlelements geänderte Sollwerte, welche beim Abgleich im Rechner 41. berücksichtigt werden.

Dieser Abgleich ist vor allem während des Betriebs der Anlage von Bedeutung, da auftretende Fehler am Kühlelement, wie etwa Undichtigkeiten des Rohrs 1, so auch beim Betreiben der Anlage mit geringen Nennströmen schon frühzeitig, d.h. vor einer Überlastung eines der Kühlelemente, erkannt werden und vor einem Ausfall des fehlerbehafteten Kühlelements behoben werden können.

Es ist aber auch möglich, vor einer ersten Inbetriebnahme oder einer Wiederinbetriebnahme der Anlage eine der Kenngrössen eines Kühlelements der Anlage zu erfassen. Ein fehlerhaftes Kühlelement kann so rasch erkannt und leicht ausgewechselt werden. Das Risiko eines Ausfalls des Kühlelements im nachfolgenden Betrieb wird so zusätzlich herabgesetzt.

### BEZUGSZEICHENLISTE

- 1: Rohr
- 2: Arbeitsmedium
- 3: Verdampfer
- 4: Kondensator
- 5: Isolierhohlkörper
- 6: Balg
- 7: Auffangvolumen
- 8: Hilfsgas
- 8': Grenzschicht
- 9: Fenster
- 10: Kapselung
- 11, 12: Mantelrohre
- 13: Gehäuse
- 14: Seitenwände
- 15: Querwände
- 16: Kühlgasströmung
- 20: Stromleiter
- 21: Abschnitt, Anschlussgehäuse
- 22: Abschnitt, Löschkammer
- 22': Löschkammergehäuse
- 23: Abschnitt, Antriebsgehäuse
- 24: Abschnitt, Trennerrohr
- 25: Abschnitt, Trennergehäuse
- 30,31,32: Kühlelemente
- 40: Auswerteeinheit
- 41: Rechner
- 42: Sollwerte
- 43: Grenzwert
- 44: Anzeigegerät
- S₁: Sensor, Stromerfassung
- S₂: Sensor, Thermoelement
- S₃: Sensor, Wärmestrahlungsdetektor
- S₄: Teilentladungssensor
- S₅: Sensor, Strömungssensor
- S₆, S_{6'},S₇, S₇: Temperatursensoren, Thermoelemente
- S₈: Drucksensor
- S₉, S₁₀, S₁₁: Temperatursensoren, Wärmebildkameras
- G: Generator
- T: Trennschalter
- K: Videokamera
- Q: Lichtquelle

## Patentansprüche

1. Elektrische Anlage mit einem bei Betrieb der Anlage Stromwärme erzeugenden und auf Hochspannungspotential liegenden Stromleiter (20) und mit einem ein kondensierbares Arbeitsmittel (2) enthaltenden und als Wärmerohr ausgebildeten Kühlelement (30, 31, 32), welches einen vom Stromleiter (20) der Anlage heizbaren Verdampfer (3) und einen der Heizwirkung des Stromleiters (20) entzogenen Kondensator (4) aufweist und wobei der Verdampfer (3) thermisch an den Stromleiter (20) ankoppelt,
**dadurch gekennzeichnet, dass**
- der Stromleiter (20) In wärmeleitendem Kontakt mit dem Kühlelement (30, 31) steht,
- das Kühlelement (30, 31) einen Isolator aufweist um den Kondensator auf Erdpotential bzw. auf das elektrische Potential der Kapselung zu führen
- und durch eine übennrachungseinrichtung mit mindestens einem ersten Sensor (S₃ bis S₁₁) zur Erfassung einer Kenngrösse des Kühlelements und mit einer Ausgangssignale des ersten Sensors aufnehmenden Auswerteeinheit (40) zur Bewertung der Ausgangssignale und zur Bildung eines den Zustand und/oder die Funktionsfähigkeit des Kühlelements beschreibenden Signals.

2. Anlage nach Anspruch 1, **dadurch gekennzeichnet, dass** der erste Sensor als Sensor (S₆, S_{6'}, S₇, S_{7'}, S₉, S₁₀, S₁₁) zur Erfassung der Temperatur und/oder der Temperaturverteilung des Kondensators (4), als Sensor **(S₈)** zur Erfassung des Drucks des Arbeitsmittels (2) im Kühlelement (30, 31) oder als Sensor (S₁₅) zur Erfassung des Strömungsverhalten, insbesondere des Durchflusses, des Arbeitsmittels (2) im Kühlelement (30, 31) ausgebildet und angeordnet ist.

3. Anlage nach Anspruch 2, **dadurch gekennzeichnet, dass** der als Temperatursensor (S₉, S₁₀, S₁₁) ausgebildete erste Sensor mit Abstand zum Kühlelement (30, 31) angeordnet und zur Erfassung von Wärmestrahlung ausgeführt ist.

4. Anlage nach Anspruch 3, **dadurch gekennzeichnet, dass** der Temperatursensor als Wärmebildkamera (S₉, S₁₀, S₁₁) ausgeführt ist

5. Anlage nach Anspruch 2 mit einer zur Führung von Rückstrom ausgebildeten Kapselung (10), auf welcher der auf dem Potential der Kapselung (2) gehaltene Kondensator (4) des Kühlelements (30, 31) angeordnet ist, **dadurch gekennzeichnet, dass** der Temperatursensor (S₆, S_{6'}, S₇, S_{7'}) als Thermoelement ausgeführt ist.

6. Anlage nach Anspruch 5, **dadurch gekennzeichnet, dass** am Kühlelement (31) mindestens zwei jeweils als Thermoelement ausgebildete Temperatursensoren (S₆. S_{6'}, S₇, S_{7'}) vorgesehen sind.

7. Anlage nach einem der Ansprüche 2 bis 6, **dadurch gekennzeichnet, dass** der als Strömungssensor (S₅) ausgebildete erste Sensor zur optischen, magnetischen oder kapazitiven Erfassung der Strömung des Arbeitsmittels (2) ausgeführt ist.

8. Anlage nach einem der Ansprüche 2 bis 7, **dadurch gekennzeichnet, dass** der erste Sensor (S₄) zur Erfassung von Teilentladungen ausgebildet ist.

9. Anlage nach einem der Ansprüche 2 bis 8, **dadurch gekennzeichnet, dass** mindestens zwei erste Sensoren (S₄, S₅, S₆, S₈) vorgesehen sind, welche jeweils verschiedene Kenngrössen des Kühlelements (30, 31) erfassen.

10. Anlage nach einem der Ansprüche 1 bis 9. **dadurch gekennzeichnet, dass** mindestens ein zweiter Sensor (S₁ bis S₃) vorgesehen ist, der zum Erfassen einer Betriebskenngrösse der Anlage angeordnet und ausgebildet ist, und dessen Ausgang mit einem Rechner (41) der Auswerteeinheit (40) verbunden ist.

11. Anlage nach Anspruch 10, **dadurch gekennzeichnet, dass** der zweite Sensor zur berührungslosen Erfassung einer im Innenraum zwischen Kapselung (10) und Stromleiter (20) herrschenden Lufttemperatur oder der Temperatur des Stromleiters (20) ausgebildet und angeordnet ist.

12. Verfahren zur Überwachung der Anlage nach einem der Ansprüche 1 bis 11, **gekennzeichnet durch** folgende Merkmale:
es wird mindestens eine Kenngrösse des als Wärmerohr ausgebildeten Kühlelements (30, 31) erfasst,
die erfasste Kenngrösse wird mit vorgegebenen Werten (42) der Kenngrösse verglichen, und
aus den Vergleichswerten wird ein den Zustand und/oder die Funktionsfähigkeit des Kühlelements beschreibendes Signal gebildet, welches für eine Diagnose oder eine Frühdiagnose des Kühlelements (30, 31) abgerufen werden kann oder welches oberhalb eines Grenzwerts (43) als Meldesignal ausgegeben wird.

13. Verfahren nach Anspruch 12, **dadurch gekennzeichnet, dass** die erfassten Werte der Kenngrösse vor dem Vergleich mit zusätzlich erfassten Betriebskenngrössen der Anlage abgeglichen werden, wie vorzugsweise dem Strom oder der Temperatur des Stromleiters (20) oder bei einer gekapselt ausgeführten Anlage mit einer im Innenraum zwischen Kapselung (10) und Stromleiter (20) herrschenden Lufttemperatur.

14. Verfahren nach einem der Ansprüche 12 oder 13, **dadurch gekennzeichnet, dass** die Kenngrösse des Kühlelements während des Betriebs der Anlage erfasst wird.

15. Verfahren nach Anspruch 12, **dadurch gekennzeichnet, dass** die Kenngrösse des Kühlelements vor der Inbetriebnahme oder während einer Revision der Anlage erfasst wird.

16. Elektrische Anlage mit einem bei Betrieb der Anlage Stromwärme erzeugenden und auf Hochspannungspotential liegenden Stromleiter (20) und mit einem ein kondensierbares Arbeitsmittel (2) enthaltenden und als Wärmerohr ausgebildeten Kohlelement (32), welches einen vom Stromleiter (20) der Anlage heizbaren Verdampfer (3) und einen der Heizwirkung des Stromleiters (20) entzogenen Kondensator (4) aufweist und wobei der Verdampfer (3) thermisch an den Stromleiter (20) ankoppelt, **dadurch gekennzeichnet, dass**
- der Stromleiter (20) in wärmeleitendem Kontakt mit dem Kühlelemente (32) steht,
- das alle Teile des Kühlelements (32) auf Hochspannungspotential liegen
- und durch eine überwachungseinrichtung mit mindestens einem ersten Sensor (S₃ bis S₁₁) zur Erfassung einer Kenngrösse des Kühlelement und mit einer Ausgangssignale des ersten Sensors aufnehmenden Auswerteeinheit (40) zur Bewertung der Ausgangssignale und zur Bildung eines den Zustand und/oder die Funktionsfähigkeit des Kühlelements beschreibenden Signals.

17. Anlage nach Anspruch 16, **dadurch gekennzeichnet, dass** der erste Sensor als Sensor (S₆, S_{6'}, S₇, S_{7'}-. S₉. S₁₀, S₁₁) zur Erfassung der Temperatur und/oder der Temperaturverteilung des Kondensators (4), als Sensor (S₈) zur Erfassung des Drucks des Arbeitsmittels (2) im Kühlelement (32) oder als Sensor (S₁₅) zur Erfassung des Strömungsverhalten, insbesondere des Durchflusses, des Arbeitsmittels (2) im Kühlelement (32) ausgebildet und angeordnet ist.

## Claims

1. Electrical installation with a current conductor (20), which produces Joulean heat during operation of the installation, and is at a high voltage potential and with a cooling element (30, 31, 32), which contains a condensable working medium (2) and is in the form of a heat pipe and has an evaporator (3), which can be heated by the current conductor (20) of the installation, and a condenser (4), which has been withdrawn from the heating effect of the current conductor (20), and wherein the evaporator (3) is coupled thermally to the current conductor (20), **characterized in that**
- the current conductor (20) is in thermally conductive contact with the cooling element (30, 31),
- the cooling element (30, 31) has an insulator in order to lead the condenser to ground potential or to the electrical potential of the encapsulation,
- and by a monitoring device with at least one first sensor (S₃ to S₁₁) for detecting a parameter of the cooling element and with an evaluation unit (40), which receives output signals from the first sensor, for evaluating the output signals and for forming a signal describing the state and/or the functionality of the cooling element.

2. Installation according to Claim 1, **characterized in that** the first sensor is in the form of or is arranged as a sensor (S₆, S_{6'}, S₇, S_{7'}, S₉, S₁₀*,* S₁₁) for detecting the temperature and/or the temperature distribution of the condenser (4), as a sensor (S₈) for detecting the pressure of the working medium (2) in the cooling element (30, 31) or as a sensor (S₁₅) for detecting the flow behavior, in particular the throughflow, of the working medium (2) in the cooling element (30, 31) .

3. Installation according to Claim 2, **characterized in that** the first sensor, which is in the form of a temperature sensor (S₉, S₁₀, S₁₁), is arranged at a distance from the cooling element (30, 31) and is designed to detect thermal radiation.

4. Installation according to Claim 3, **characterized in that** the temperature sensor is in the form of a thermal imaging camera (S₉, S₁₀, S₁₁) .

5. Installation according to Claim 2 with an encapsulation (10), which is designed to guide reverse current and on which the condenser (4), which is held at the potential of the encapsulation (10), of the cooling element (30, 31) is arranged, **characterized in that** the temperature sensor (S₆, S_{6'}, S₇, S_{7'}) is in the form of a thermocouple.

6. Installation according to Claim 5, **characterized in that** at least two temperature sensors (S₆, S_{6'}, S₇, S₇'), which are each in the form of a thermocouple, are provided on the cooling element (31).

7. Installation according to one of Claims 2 to 6, **characterized in that** the first sensor, which is in the form of a flow sensor (S₅), is designed for the optical, magnetic or capacitive detection of the flow of the working medium (2).

8. Installation according to one of Claims 2 to 7, **characterized in that** the first sensor (S₄) is designed to detect partial discharges.

9. Installation according to one of Claims 2 to 8, **characterized in that** at least two first sensors (S₄, S₅, S₆, S₈) are provided which each detect different parameters of the cooling element (30, 31).

10. Installation according to one of Claims 1 to 9, **characterized in that** at least one second sensor (S₁ to S₃) is provided which is arranged and designed to detect an operational parameter of the installation and whose output is connected to an arithmetic unit (41) of the evaluation unit (40).

11. Installation according to Claim 10, **characterized in that** the second sensor is designed and arranged for the contactless detection of an air temperature prevailing in the internal area between the encapsulation (10) and the current conductor (20) or the temperature of the current conductor (20).

12. Method for monitoring the installation according to one of Claims 1 to 11, **characterized by** the following features:
at least one parameter of the cooling element (30, 31) in the form of a heat pipe is detected,
the detected parameter is compared with predetermined values (42) for the parameter, and
from the comparison values, a signal describing the state and/or the functionality of the cooling element is formed, which signal can be called up for a diagnosis or an early diagnosis of the cooling element (30, 31) or is output as an alarm signal above a limit value (43).

13. Method according to Claim 12, **characterized in that** the detected values for the parameter are adjusted prior to the comparison with additionally detected operational parameters of the installation, such as preferably the current or the temperature of the current conductor (20) or in the case of an encapsulated installation with an air temperature prevailing in the internal area between the encapsulation (10) and the current conductor (20).

14. Method according to either of Claims 12 and 13, **characterized in that** the parameter of the cooling element is detected during operation of the installation.

15. Method according to Claim 12, **characterized in that** the parameter of the cooling element is detected before the installation is first brought into operation or during maintenance work on the installation.

16. Electrical installation with a current conductor (20), which produces Joulean heat during operation of the installation, and is at a high voltage potential and with a cooling element (32), which contains a condensable working medium (2) and is in the form of a heat pipe and has an evaporator (3), which can be heated by the current conductor (20) of the installation, and a condenser (4), which has been withdrawn from the heating effect of the current conductor (20), and wherein the evaporator (3) is coupled thermally to the current conductor (20), **characterized in that**
- the current conductor (20) is in thermally conductive contact with the cooling element (32),
- **in that** all the parts of the cooling element (32) are at high voltage potential,
- and by a monitoring device with at least one first sensor (S₃ to S₁₁) for detecting a parameter of the cooling element and with an evaluation unit (40), which receives output signals from the first sensor, for evaluating the output signals and for forming a signal describing the state and/or the functionality of the cooling element.

17. Installation according to Claim 16, **characterized in that** the first sensor is in the form of or is arranged as a sensor (S₆, S_{6'}, S₇, S_{7'}, S₉, S₁₀*,* S₁₁) for detecting the temperature and/or the temperature distribution of the condenser (4), as a sensor (S₈) for detecting the pressure of the working medium (2) in the cooling element (32) or as a sensor (S₁₅) for detecting the flow behavior, in particular the throughflow, of the working medium (2) in the cooling element (32).

## Revendications

1. Installation électrique comprenant un conducteur (20) générant de la chaleur électrique lors du fonctionnement de l'installation et se trouvant à un potentiel de haute tension, et comprenant un élément de refroidissement (30, 31, 32) contenant un milieu de travail condensable (2) et réalisé sous la forme d'un tube thermique, qui présente un évaporateur (3) pouvant être chauffé par le conducteur (20) de l'installation et un condenseur (4) non soumis à l'effet de chauffage du conducteur (20), et dans laquelle l'évaporateur (3) est raccordé thermiquement au conducteur (20),
**caractérisée en ce que**
- le conducteur (20) est en contact thermoconducteur avec l'élément de refroidissement (30, 31),
- l'élément de refroidissement (30, 31) présente un isolant afin d'amener le condenseur au potentiel de la terre ou au potentiel électrique de l'encapsulage,
- et pour évaluer les signaux de sortie et pour former un signal décrivant l'état et/ou la fonctionnalité de l'élément de refroidissement par un dispositif de surveillance avec au moins un premier capteur (S₃ à S₁₁) pour détecter une valeur caractéristique de l'élément de refroidissement et avec une unité d'analyse (40) recevant des signaux de sortie du premier capteur.

2. Installation selon la revendication 1, **caractérisée en ce que** le premier capteur est réalisé et agencé en tant que capteur (S₆, S_{6'}, S₇, S_{7'}, S₉, S₁₀, S₁₁) pour détecter la température et/ou la distribution de température du condenseur (4), en tant que capteur (S₈) pour détecter la pression du milieu de travail (2) dans l'élément de refroidissement (30, 31) ou en tant que capteur (S₁₅) pour détecter le comportement d'écoulement, notamment le débit, du milieu de travail (2) dans l'élément de refroidissement (30, 31).

3. Installation selon la revendication 2, **caractérisée en ce que** le premier capteur réalisé en tant que capteur de température (S₉, S₁₀, S₁₁) est disposé à distance de l'élément de refroidissement (30, 31) et est réalisé pour détecter le rayonnement thermique.

4. Installation selon la revendication 3, **caractérisée en ce que** le capteur de température est réalisé sous la forme d'une caméra thermique (S_{9,} S₁₀, S₁₁).

5. Installation selon la revendication 2, comprenant un encapsulage (10) réalisé pour guider le reflux, sur lequel encapsulage est disposé le condenseur (4) de l'élément de refroidissement (30, 31) maintenu au potentiel de l'encapsulage (2), **caractérisée en ce que** le capteur de température (S₆, S_{6'}, S₇, S_{7'}) est réalisé sous la forme d'un thermocouple.

6. Installation selon la revendication 5, **caractérisée en ce que** l'on prévoit sur l'élément de refroidissement (31) au moins deux capteurs de température (S₆, S_{6'}, S₇, S_{7'}) réalisés chacun sous la forme d'un thermocouple.

7. Installation selon l'une quelconque des revendications 2 à 6, **caractérisée en ce que** le premier capteur réalisé sous forme de capteur d'écoulement (S₅) est réalisé pour détecter l'écoulement du milieu de travail (2) de manière optique, magnétique ou capacitive.

8. Installation selon l'une quelconque des revendications 2 à 7, **caractérisée en ce que** le premier capteur (S₄) est réalisé pour détecter des décharges partielles.

9. Installation selon l'une quelconque des revendications 2 à 8, **caractérisée en ce que** l'on prévoit au moins deux premiers capteurs (S₄, S₅, S₆, S₈) qui détectent à chaque fois des valeurs caractéristiques différentes de l'élément de refroidissement (30, 31).

10. Installation selon l'une quelconque des revendications 1 à 9, **caractérisée en ce que** l'on prévoit au moins un deuxième capteur (S₁ à S₃), qui est agencé et réalisé pour détecter une valeur caractéristique de fonctionnement de l'installation, et dont la sortie est connectée à un ordinateur (41) de l'unité d' analyse (40).

11. Installation selon la revendication 10,
**caractérisée en ce que** le deuxième capteur est réalisé et agencé pour la détection sans contact d'une température de l'air régnant dans l'espace interne entre l'encapsulage (10) et le conducteur (20) ou de la température du conducteur (20).

12. Procédé pour surveiller l'installation selon l'une quelconque des revendications 1 à 11, **caractérisé par** les caractéristiques suivantes :
on détecte au moins une valeur caractéristique de l'élément de refroidissement (30, 31) réalisé sous la forme d'un tube thermique,
la valeur caractéristique détectée est comparée à des valeurs prédéfinies (42) de la valeur caractéristique et
à partir des valeurs comparatives, on établit un signal décrivant l'état et/ou la fonctionnalité de l'élément de refroidissement, qui peut être appelé pour un diagnostic ou pour un diagnostic préalable de l'élément de refroidissement (30, 31) ou qui peut être émis en tant que signal d'alerte au-dessus d'une valeur limite (43).

13. Procédé selon la revendication 12, **caractérisé en ce que** les valeurs détectées de la valeur caractéristique sont comparées avant la comparaison avec des valeurs caractéristiques de fonctionnement détectées supplémentaires de l'installation, comme par exemple le courant ou la température du conducteur (20), ou dans le cas d'une installation réalisée avec un encapsulage, à une température de l'air régnant dans l'espace interne entre l'encapsulage (10) et le conducteur (20).

14. Procédé selon l'une quelconque des revendications 12 ou 13, **caractérisé en ce que** la valeur caractéristique de l'élément de refroidissement est détectée pendant le fonctionnement de l'installation.

15. Procédé selon la revendication 12, **caractérisé en ce que** la valeur caractéristique de l'élément de refroidissement est détectée avant la mise en service ou pendant une révision de l'installation.

16. Installation électrique comprenant un conducteur (20) générant de la chaleur électrique lors du fonctionnement de l'installation et se trouvant à un potentiel de haute tension, et comprenant un élément de refroidissement (32) contenant un milieu de travail condensable (2) et réalisé sous la forme d'un tube thermique, qui présente un évaporateur (3) pouvant être chauffé par le conducteur (20) de l'installation et un condenseur (4) non soumis à l'effet de chauffage du conducteur (20), et dans laquelle l'évaporateur (3) est raccordé thermiquement au conducteur (20),
**caractérisée en ce que**
- le conducteur (20) est en contact thermoconducteur avec l'élément de refroidissement (32),
- toutes les pièces de l'élément de refroidissement (32) sont à un potentiel de haute tension,
- et pour évaluer les signaux de sortie et pour former un signal décrivant l'état et/ou la fonctionnalité de l'élément de refroidissement par un dispositif de surveillance comprenant au moins un premier capteur (S₃ à S₁₁) pour détecter une valeur caractéristique de l'élément de refroidissement et avec une unité d'analyse (40) recevant des signaux de sortie du premier capteur.

17. Installation selon la revendication 16, **caractérisée en ce que** le premier capteur est réalisé et agencé en tant que capteur (S₆, S_{6'}, S₇, S_{7'}, S₉, S₁₀, S₁₁) pour détecter la température et/ou la distribution de température du condenseur (4), en tant que capteur (S₈) pour détecter la pression du milieu de travail (2) dans l'élément de refroidissement (32) ou en tant que capteur (S₁₅) pour détecter le comportement d'écoulement, notamment le débit, du milieu de travail (2) dans l'élément de refroidissement (32).
